# EUROPÄISCHE PATENTANMELDUNG

(11) **EP 1 342 601 A1**
(43) Veröffentlichungstag der Anmeldung: **10.09.2003**
(21) Anmeldenummer: 03002354.3
(22) Anmeldetag: 04.02.2003
(51) Int. Cl.: B60J 7/22

(54) **Windabweiser für die Dachöffnung eines Kraftfahrzeugs**

(30) Priorität: 13.02.2002 DE 10206091
(71) Anmelder: ArvinMeritor GmbH, 63128 Dietzenbach (DE)
(72) Erfinder: Weiss, Edgar, 63755 Alzenau (DE); Imgram, Bardo, Dipl.-Ing., 63500 Seligenstadt (DE)
(74) Vertreter: Oppermann, Ewald, Dipl.-Ing.

(57) **Zusammenfassung**

Vorgeschlagen wird ein Windabweiser für eine Schiebe- oder Schiebehebedachkonstruktion, bei welchem ein aus unterschiedlichen Kunststoffkomponenten aufgebauter Windabweiserkörper verwendet wird, der aus einem die Formbeständigkeit und Festigkeit sichernden Grundkörper (11') und angespritzten Weichkunststoffelementen (29, 30, 31, 34) aufgebaut ist, die an allen für Geräuschbildungen relevanten Stellen in gewünschter Formgebung angespritzt sind.

## Beschreibung

Die Erfindung bezieht sich auf einen Windabweiser für die Dachöffnung eines Kraftfahrzeugs, der ein bewegbarer Deckel zum wahlweisen Verschließen oder mindestens teilweisen Freigeben derselben zugeordnet ist, mit einem Windabweiserkörper, der im wesentlichen entlang der Vorderkante der Dachöffnung angeordnet und zwischen einer versenkten Ruhestellung und einer ausgestellten Betriebsstellung schwenkbar ist, wobei der Windabweiser aus mehreren Teilen zusammengesetzt ist, die aus unterschiedlichen Werkstoffen bestehen.

Derartige Windabweiser schwenken beim Öffnen des Deckels durch auf sie einwirkende Federkraft aus der Ruhestellung in die Betriebsstellung nach oben aus, wobei ihr Ausschwenkweg durch Anschläge begrenzt ist, und werden beim Schließen des Deckels gegen die Federkraft in die Ruhestellung zurückgeführt. Windabweiser haben die Aufgabe, die im Fahrbetrieb mit ganz oder teilweise geöffnetem Deckel auftretenden Windgeräusche zu verringern. Dabei regt die im Fahrbetrieb auf den ausgestellten Windabweiser einwirkende Windkraft diesen zu Schwingungen an. Diese können zu störenden Windabweiserbewegungen und im Ergebnis zu unerwünschten Rattergeräuschen führen, wenn der schwingende Windabweiser auf feste Bauteile der Dachkonstruktion auftrifft. Auch in seiner Ruhestellung kann der Windabweiser durch Fahrerschütterungen in Schwingungen versetzt werden und auf benachbarte Bauteile ratternd auftreffen.

Bei einem bekannten Windabweiser (DE 198 26 434 C1) wird für die durch die Federkraft herbeigeführte ausgestellte Betriebsstellung ein schwingungssicherer Stand des Windabweisers durch Abstützung des Windabweisers über eine Gelenkhebelanordnung an dem Dachrahmen erreicht, der in üblicher Weise die Dachöffnung unterfängt und auch den Windabweiser über seitlich daran angebrachte Ausstellarme lagert. Die Gelenkhebelanordnung ist jedoch aufwendig und erfordert einen erhöhten Montageaufwand.

Bei einem bekannten Windabweiser (DE 44 46 016 C1) der eingangs angegebenen Gattung ist der Windabweiserkörper als universelles Grundprofil, beispielsweise als Leichtmetall-Strangpreßprofil, ausgebildet, das einen Aufnahmekanal besitzt, in welchen ein den hinten liegenden Bereich des Windabweiserkörpers darstellendes Abschlußprofil aus Gummi oder Kunststoff nachträglich einfügbar ist, das je nach individuellen Erfordernissen zur Festlegung der günstigsten Form aus einer Gruppe unterschiedlich gestalteter Abschlußprofile ausgewählt ist. Maßnahmen zur Verhinderung von unerwünschten Rattergeräuschen od.dgl. in der Betriebsstellung und in der Ruhestellung des Windabweisers sind bei diesem bekannten Windabweiser nicht vorgesehen.

Der Erfindung liegt die Aufgabe zugrunde, einen Windabweiser bereitzustellen, der aufgrund seiner besonderen Ausbildung mindestens eine Verringerung aller geräuschbildenden Einflüsse bei einfachen, sich auf den Windabweiserkörper beschränkenden Maßnahmen ermöglicht.

Die gestellte Aufgabe wird durch die im Patentanspruch 1 angegebenen Merkmale gelöst. Vorteilhafte oder zweckmäßige Weiterbildungen des Windabweisers gehen aus den Unteransprüchen hervor und sind nachfolgend ebenfalls näher beschrieben.

Der erfindungsgemäße Aufbau des Windabweiserkörpers aus einem formbeständigen Kunststoffgrundkörper und einer daran zur Erzielung eines form- oder haftschlüssigen Verbundes angespritzten Weichkomponente eröffnet die vorteilhafte Möglichkeit, die Weichkomponente überall da am Grundkörper vorzusehen, wo geräuschreduzierende Maßnahmen als vorteilhaft oder zweckmäßig erkannt werden.

So können Aufschlaggeräusche und auch Rattergeräusche in der Ruhestellung beim Verschwenken des Windabweisers in seine Ruhestellung bzw. bei in seiner Ruhestellung befindlichem Windabweiser wirksam gedämpft werden, wenn entsprechend Anspruch 2 Weichkunststoffelemente nach unten zumindest partiell über den Grundkörper vorstehend an den Grundkörper angespritzt sind. Diese unteren Weichkunststoffelemente legen sich dem Vorderteil des Dachrahmens von oben her an.

Weiterhin ist es von Vorteil, wenn gemäß Anspruch 3 Weichkunststoffelemente nach vorn über die Vorderkante des Grundkörpers vorstehend angespritzt sind. Dadurch wird erreicht, daß der in seiner Ruhestellung befindliche Windabweiser nicht ratternd an die vordere Wand des Vorderteils des Dachrahmens anschlagen kann.

Schließlich lassen sich die bei ausgestelltem Windabweiser an der oberen Fläche bzw. an seiner Hinterkante'durch Luftwirbel im Fahrbetrieb entstehenden Windgeräusche abschwächend beeinflussen, wenn entsprechend Anspruch 4 ein über die Länge des Grundkörpers vorzugsweise durchgehendes Weichkunststoffelement an die in der Betriebsstellung die obere Fläche des Grundkörpers bildende Fläche angespritzt ist, das eine strukturierte Oberfläche zur Strömungsbeeinflußung aufweisen kann.

Die Anordnung kann vorteilhaft so getroffen sein, daß die nach unten über den Grundkörper vorstehenden und die nach vorn über die Vorderkante des Grundkörpers vorstehenden Weichkunststoffelemente einteilig angespritzt sind, wie das im Anspruch 5 angegeben ist. Hierbei umschließen die angespritzten Weichkunststoffelemente gewissermaßen die Vorderkante des Grundkörpers.

Eine besonders vorteilhafte Ausbildung ist dem Anspruch 6 entnehmbar und dadurch gekennzeichnet, daß die nach vorn über die Vorderkante des Grundkörpers vorstehenden Weichkunststoffelemente im wesentlichen als über die Länge des Grundkörpers durchgehendes Hohlprofil od.dgl. ausgebildet sind, das in der ausgestellten Betriebsstellung den Spalt zwischen dem Grundkörper und der Vorderkante der Dachöffnung schließt. Dieser Spalt zwischen dem Grundkörper und der Vorderkante der Dachöffnung, d.h. der Abkantung des Dachblechs, ist konstruktiv unvermeidbar, weil einerseits der Windabweiser bei seinen Schwenkbewegungen vorn nicht an die Vorderkante der Dachöffnung und das Vorderteil des Dachrahmens anschlagen darf und andererseits Fertigungstoleranzen durch den Spalt auszugleichen sind. Der bei vielen bekannten Windabweisern, auch bei den eingangs genannten, vorhandene Spalt führt in der Betriebsstellung dazu, daß im Fahrbetrieb Luft über den Spalt nach unten strömt und den Windabweiser unterströmt, was mit erheblichen Windgeräuschen verbunden sein kann und zur Schwingungsanregung des Windabweisers beiträgt. Hier schafft die im Anspruch 6 angegebene Ausbildung wirksame Abhilfe, indem der in Rede stehende Spalt in der Betriebsstellung des Windabweisers unter elastischer Anpassung oder Verformung des Hohlprofils geschlossen wird.

Auch an die den Ausschwenkweg des Windabweisers begrenzenden Anschläge können Weichkunststoffelemente angespritzt sein, wie aus Anspruch 7 hervorgeht. Vorzugsweise können diese Weichkunststoffelemente, welche Anschlaggeräusche wirksam dämpfen, einteilig mit nach unten über den Grundkörper vorstehenden Weichkunststoffelementen gemäß Anspruch 8 einteilig spritzgeformt sein, so daß die Anschläge beide Grenzlagen des Windabweisers auftreffgeräuscharm markieren.

Der Grundkörper ist entsprechend Anspruch 9 vorzugsweise aus einem mit Glas- oder Kohlefasern armierten thermoplastischen Kunststoff geformt und verfügt daher über die notwendige Festigkeit und Formbeständigkeit. Allerdings kann der Grundkörper auch aus einem abgelängten Aluminiumstrangpreßprofil gewonnen sein.

Als thermoplastische Kunststoffe sind besonders die im Anspruch 10 angegebenen geeignet, nämlich Polyamid 6.6, Polyethylenterephthalat und Polypropylen.

Die durch Anspritzen geformten Weichkunststoffelemente können aus einem elastomeren thermoplastischen Kunststoff bestehen, wie aus Anspruch 11 hervorgeht. Besondere Eignung hierfür besitzen die in Anspruch 12 aufgeführten elastomeren thermoplastischen Kunststoffe, die ausgewählt sind aus der Gruppe Styrol-Dien-Blockcopolymere, Ethylen-Propylen-Dien-Polymethylen (EPDM), EPDM-Polypropylen-Verschnitte und Polyurethan-Elastomere.

Weitere Einzelheiten der Erfindung werden unter Bezugnahme auf die in den Zeichnungen dargestellten bevorzugten Ausführungsbeispiele näher erläutert. Darin zeigt:
- Fig. 1: eine Perspektivansicht eines Fahrzeugdachs mit Schiebedach bei geschlossenem Deckel,
- Fig. 2: eine abgebrochene Perspektivansicht auf die in Fahrtrichtung vordere linke Ecke des Fahrzeugdachs gemäß Fig. 1 bei geöffnetem (nicht dargestellten) Deckel und in seine Betriebsstellung ausgestelltem Windabweiser,
- Fig. 3: den abgebrochenen Schnitt entlang der Schnittverlaufslinie III-III in Fig. 1, jedoch ohne Dach und Deckel, bei in seiner Ruhestellung dargestelltem Windabweiser in einer ersten Ausführungsform,
- Fig. 4: den abgebrochenen Schnitt entlang der Schnittverlaufslinie IV-IV in Fig. 2, jedoch ohne Dachrahmen bei in seiner ausgestellten Betriebsstellung dargestelltem Windabweiser der ersten Ausführungsform gemäß Fig. 3,
- Fig. 5: einen abgebrochenen Schnitt ähnlich Fig. 3 mit einem Windabweiser entsprechend einer Variante der ersten Ausführungsform,
- Fig. 6: einen abgebrochenen Schnitt ähnlich Fig. 4 mit der in Fig. 5 dargestellten Variante der ersten Ausführungsform,
- Fig. 7.: den abgebrochenen Schnitt entlang der Schnittverlaufslinie VII-VII in Fig. 1, jedoch ohne Dach und Deckel, bei in seiner Ruhestellung dargestelltem Windabweiser in einer zweiten Ausführungsform und
- Fig. 8: den abgebrochenen Schnitt entlang der Schnittverlaufslinie VIII-VIII in Fig. 2, jedoch ohne Dachrahmen bei in seiner ausgestellten Betriebsstellung dargestelltem Windabweiser der zweiten Ausführungsform gemäß Fig. 7, wobei jedoch die Darstellung in Fig. 2 nicht mit dieser zweiten Ausführungsform übereinstimmt.

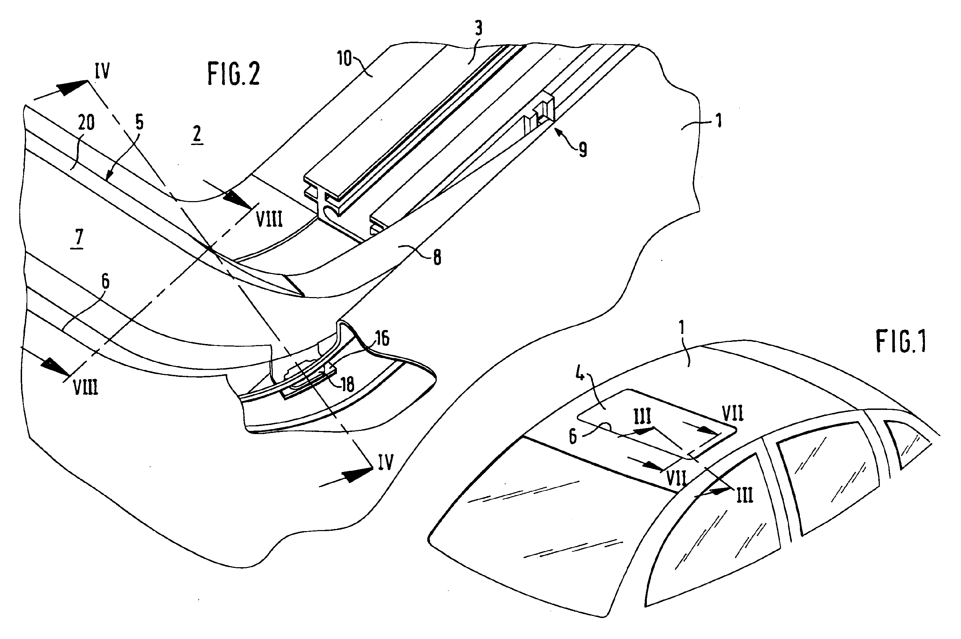

Aus den Figuren 1 und 2 der schematisierten Zeichnungen sind u.a. ein festes Fahrzeugdach 1, eine darin angebrachte Dachöffnung 2, ein der Dachöffnung 2 zugeordneter an Führungsschienen 3 verschiebbarer oder verschiebbarer und ausstellbarer Deckel 4 und ein allgemein mit der Bezugszahl 5 bezeichneter Windabweiser ersichtlich. Entlang der Vorderkante 6 der Dachöffnung 2 ist ein nachfolgend noch näher zu beschreibender luftleitender Windabweiserkörper 7 des Windabweisers 5 angeordnet. An beiden Enden des Windabweiserkörpers 7 ist jeweils ein Ausstellarm 8 fest angebracht, der einteiliger Bestandteil des Windabweiserkörpers sein kann. Die beiden Ausstellarme 8, von denen aus Fig. 2 wegen der Spiegelbildlichkeit der Anordnung nur einer ersichtlich ist, verlaufen parallel zueinander und sind zu beiden Seiten der Dachöffnung 2 angeordnet. Die Ausstellarme 8 sind an Lagerstellen 9 um eine parallel zur Vorderkante 6 der Dachöffnung 2 verlaufende Achse schwenkbar angeordnet, was hier nicht näher dargestellt ist, weil sich die Erfindung nicht darauf bezieht. Die Führungsschienen 3 und die Lagerstellen 9 befinden sich an einem die Dachöffnung 2 unterfangenden Dachrahmen 10.

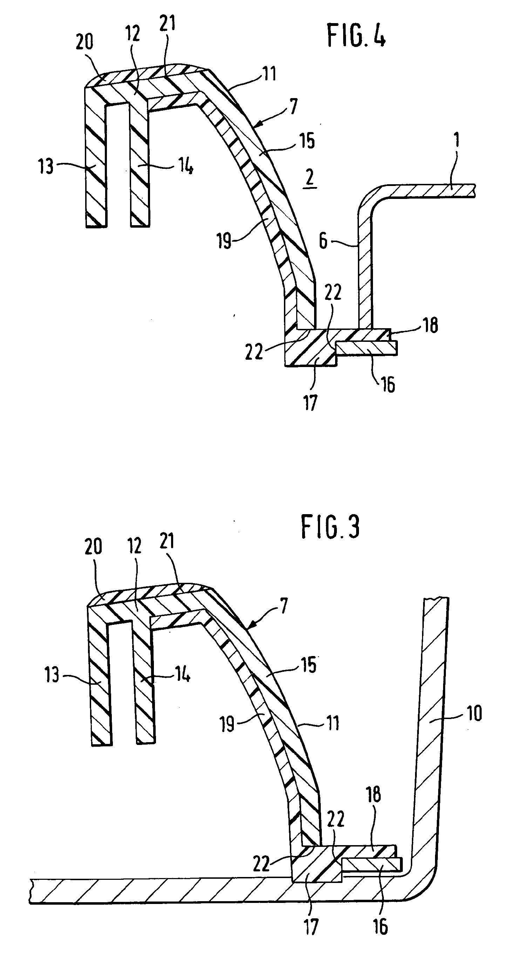

Zur Erläuterung der ersten Ausführungsform des Windabweisers 5 wird nunmehr auf die Figuren 3 und 4 Bezug genommen. Der aus einem faserverstärkten Kunststoff geformte steife Grundkörper 11 besitzt im wesentlichen vier Wandabschnitte, nämlich eine Oberwand 12, zwei davon nach unten weisende voneinander beabstandete Versteifungswände 13 und 14 und eine davon beabstandete gebogene Vorderwand 15. In den beiden Ecken des Grundkörpers 11 schließt sich jeweils ein nach außen gekehrter Anschlag 16 an die Vorderwand 15 an, welcher den Ausstellweg des Windabweisers nach oben begrenzt und dabei an eine die Dachöffnung 2 definierende, die Vorderkante 6 bildende Abkantung des Fahrzeugdachs 1 von unten anschlägt, wie in Fig. 4 dargestellt ist.

Bei dieser ersten Ausführungsform sind an den Grundkörper 11 beschränkt auf die Bereiche der beiden Ecken des Windabweisers einteilig folgende Weichkunststoffelemente angespritzt: Nach unten über den Grundkörper 11 als Puffer vorstehende Weichkunststoffelemente 17, auf den Anschlägen 16 befindliche Weichkunststoffelemente 18 und an der Innenfläche der Vorderwand 15 befindliche Weichkunststoffelemente 19, die sich auch über einen Teilbereich der Innenfläche der Oberwand 12 erstrecken. Die Elemente 19 sichern die Position der Elemente 17 und 18. In Fig. 3 ist das Element 17 den Dachrahmen überschneidend, d.h. ohne elastische Verformung dargestellt. Wie die Figuren 3 und 4 verdeutlichen, wird die Einteiligkeit der angespritzten Elemente 17 und 18 durch eine Aussparung 22 ermöglicht, die sich teils in der Vorderwand 15 und teils in dem Anschlag 16 befindet.

Weiterhin ist ein über die Länge des Grundkörpers 11 durchgehendes oder mit schießschartenähnlichen Unterbrechungen (nicht dargestellt) durchgehendes Weichkunststoffelement 20 an die obere Fläche 21 der Oberwand 12 des Grundkörpers 11 angespritzt, wodurch in der Betriebsstellung des Windabweisers für die Luftströmung eine weiche Abrißkante gebildet wird. Außerdem verhindert das Element 20 ein klapperndes Anschlagen der in der Ruhestellung des Windabweisers darüber befindlichen Elemente der Dachkonstruktion (nicht dargestellt).

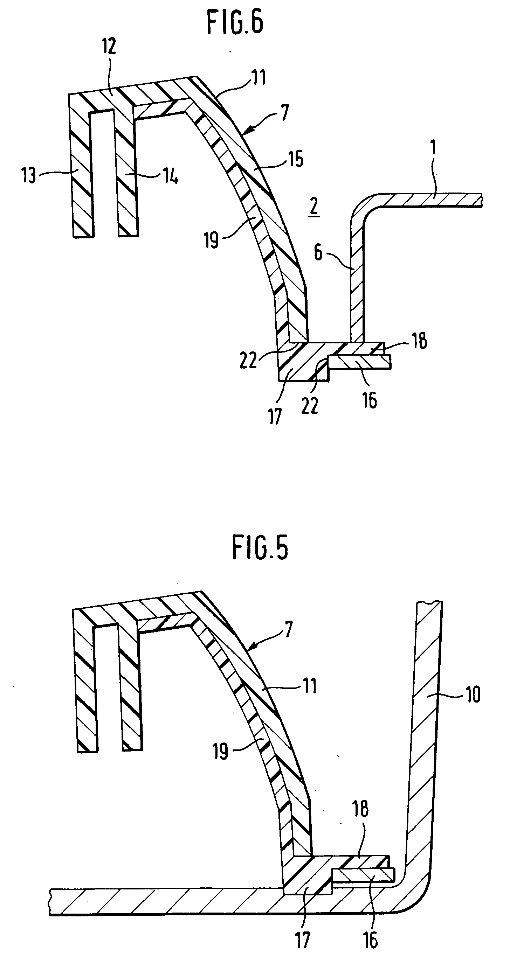

Die in den Figuren 5 und 6 dargestellte Variante der ersten Ausführungsform unterscheidet sich von der mit Bezug auf die Figuren 3 und 4 beschriebenen Ausbildung lediglich dadurch, daß an die Oberwand 12 kein Weichkunststoffelement 20 angespritzt ist.

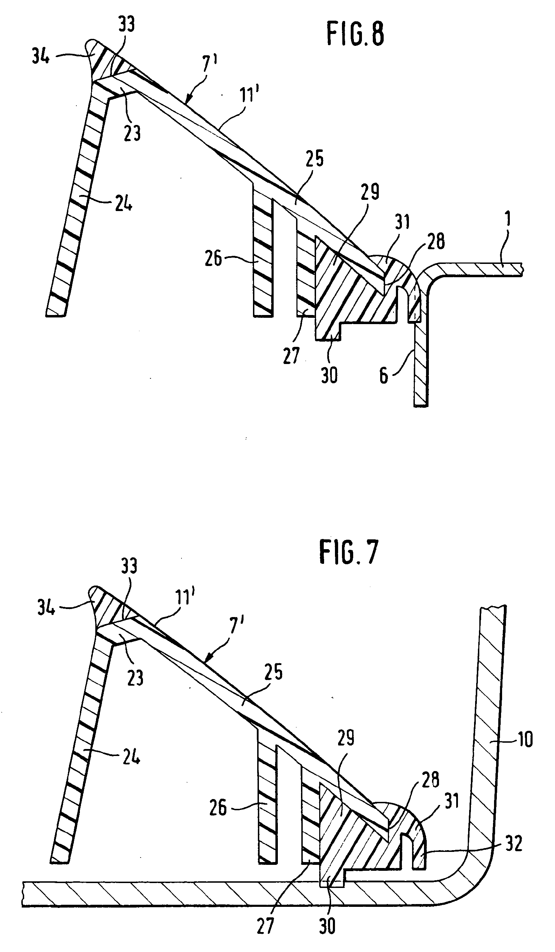

Die Figuren 7 und 8 der zweiten Ausführungsform zeigen eine mögliche Ausbildung des Grundkörpers 11' zwischen den beiderseitigen Anschlägen 16, die so angeordnet und ausgebildet sein können, wie das mit Bezug auf die Figuren 2 bis 4 beschrieben worden ist. Der Grundkörper 11' besitzt hierbei fünf Wandabschnitte, nämlich eine Oberwand 23, eine auf der einen Seite daran anschließende Rückwand 24, eine auf der anderen Seite daran anschließende, schräg angestellte Vorderwand 25 und zwei davon nach unten weisende, voneinander beabstandete Versteifungswände 26 und 27.

Bei dieser zweiten Ausführungsform ist ein Weichkunststoffkörper 29 an den Grundkörper 11' so angespritzt, daß er den V-förmigen Raum zwischen der Versteifungswand 27 und der Vorderwand 25 ausfüllt. Der Weichkunststoffkörper 29 kann sich abschnittsweise oder durchgehend etwa über die Länge des Grundkörpers 11' erstrecken. Nach unten über den Grundkörper 11' stehen Weichkunststoffelemente 30, die einteilig mit dem Weichkunststoffkörper 29 angespritzt sind, nach unten vor und können noppenartig aber auch durchgehend leistenartig ausgebildet sein.

Im gezeigten Beispiel sollen der Weichkunststoffkörper 29 und ein leistenartig ausgebildetes Weichkunststoffelement 30 etwa über die Länge des Grundkörpers 11' durchgehend an diesen angespitzt sein. Das Weichkunststoffelement 30 ist wiederum den Dachrahmen 10, an welchem es sich in der Ruhestellung des Windabweisers klapperfrei abstützt, überschneidend, d.h. ohne elastische Verformung dargestellt.

Über die Vorderkante 28 des Grundkörpers 11' steht ebenfalls im wesentlichen über die Länge des Grundkörpers 11' durchgehend ein Weichkunststoffelement 31 vor, das mit dem Weichkunststoffkörper 29 und dem Weichkunststoffelement 30 einteilig angespritzt ist. Das Weichkunststoffelement 31 ist als nach unten offenes Hohlprofil 32 ausgebildet und daher erheblich elastisch verformbar. In der in Fig. 8 dargestellten Betriebsstellung des Windabweisers schließt es den Spalt zwischen der Vorderkante 28 des Grundkörpers 11' und der Vorderkante 6 des Dachausschnitts unter elastischer Verformung, so daß der Windabweiser nicht unterströmt werden kann. Dabei stützt sich das Element 31 mit seinem Hohlprofil 32 auf beträchtlicher Länge am Dach 1 ab, was dem ausgestellten Windabweiser zugleich einen festen Stand vermittelt. Der äußere lippenartige Abschnitt des Hohlprofils 32 ist in Fig. 8 mit der Dachabkantung überschneidend, d.h. ohne elastische Verformung dargestellt.

Etwa über die Länge des Grundkörpers 11' durchgehend ist an der oberen Fläche 33 der Oberwand 23 ein weiteres Weichkunststoffelement 34 angespritzt, das im Querschnitt gesehen nach außen hin spitz zuläuft. Dieses Weichkunststoffelement 34 veranschaulicht die Vielzahl der möglichen geometrischen Gestaltungen zur Erzielung einer weichen Abrißkante für die Luftströmung.

Für die Spritzanformung der verschiedenen beschriebenen Weichkunststoffelemente ist die Spritzform so auszubilden, daß der Grundkörper 11 bzw. 11' in die Form positioniert einlegbar ist, wobei die verbleibenden Formhohlräume die Aufnahmeräume für den Weichkunst bilden, der im Schmelzfluß an den Grundkörper angespritzt wird und dabei die von den Hohlräumen vorgegebenen Formen annimmt.

Vorgeschlagen wird ein Windabweiser für eine Schiebe- oder Schiebehebedachkonstruktion, bei welchem ein aus unterschiedlichen Kunststoffkomponenten aufgebauter Windabweiserkörper verwendet wird, der aus einem die Formbeständigkeit und Festigkeit sichernden Grundkörper und angespritzten Weichkunststoffelementen aufgebaut ist, die an allen für Geräuschbildungen relevanten Stellen in gewünschter Formgebung angespritzt sind.

### Bezugszahlenliste

- 1: Fahrzeugdach
- 2: Dachöffnung
- 3: Führungsschiene
- 4: Deckel
- 5: Windabweiser
- 6: Vorderkante
- 7, 7': Windabweiserkörper
- 8: Ausstellarm
- 9: Lagerstelle
- 10: Dachrahmen
- 11, 11': Grundkörper
- 12: Oberwand
- 13: Versteifungswand
- 14: Versteifungswand
- 15: Vorderwand
- 16: Anschlag
- 17 - 20: Weichkunststoffelemente
- 21: obere Fläche
- 22: Aussparung
- 23: Oberwand
- 24: Rückwand
- 25: Vorderwand
- 26: Versteifungswand
- 27: Versteifungswand
- 28: Vorderkante
- 29: Weichkunststoffkörper
- 30, 31: Weichkunststoffelemente
- 32: Hohlprofil
- 33: obere Fläche
- 34: Weichkunststoffelement

## Patentansprüche

1. Windabweiser für die Dachöffnung (2) eines Kraftfahrzeugs, der ein bewegbarer Deckel (4) zum wahlweisen Verschließen oder mindestens teilweisen Freigeben derselben zugeordnet ist, mit einem Windabweiserkörper (7, 7'), der im wesentlichen entlang der Vorderkante (6) der Dachöffnung (2) angeordnet und zwischen einer versenkten Ruhestellung und einer ausgestellten Betriebsstellung verschwenkbar ist, wobei der Windabweiserkörper (7, 7') aus mehreren Teilen zusammengesetzt ist, die aus unterschiedlichen Werkstoffen bestehen, **dadurch gekennzeichnet, daß** der Windabweiserkörper (7, 7') aus einem Grundkörper (11, 11') aus einem faserverstärkten Kunststoff und aus an den Grundkörper (11, 11') bereichsweise angespritzten Weichkunststoffelementen (17-20, 30, 31, 34) gebildet ist.

2. Windabweiser nach Anspruch 1, **dadurch gekennzeichnet, daß** Weichkunststoffelemente (17, 30) nach unten zumindest partiell über den Grundkörper (11, 11') vorstehend an den Grundkörper (11, 11') angespritzt sind.

3. Windabweiser nach Anspruch 1 oder 2, **dadurch gekennzeichnet, daß** Weichkunststoffelemente (31) nach vorn über die Vorderkante (28) des Grundkörpers (11') vorstehend angespritzt sind.

4. Windabweiser nach einem der Ansprüche 1 bis 3, **dadurch gekennzeichnet, daß** ein über die Länge des Grundkörpers (11, 11') durchgehendes oder mit Unterbrechungen durchgehendes Weichkunststoffelement (20, 34) an die in der Betriebsstellung die obere Fläche (21, 33) des Grundkörpers (11, 11') bildende Fläche angespritzt ist.

5. Windabweiser nach den Ansprüchen 2 und 3, **dadurch gekennzeichnet, daß** die nach unten über den Grundkörper (11') vorstehenden und die nach vorn über die Vorderkante (28) des Grundkörpers (11') vorstehenden Weichkunststoffelemente (30, 31) einteilig angespritzt sind.

6. Windabweiser nach Anspruch 3 oder 4, **dadurch gekennzeichnet, daß** die nach vorn über die Vorderkante (28) des Grundkörpers (11') vorstehenden Weichkunststoffelemente (31) im wesentlichen als über die Länge des Grundkörpers (11') durchgehendes Hohlprofil (32) od.dgl. ausgebildet sind, das in der ausgestellten Betriebsstellung den Spalt zwischen dem Grundkörper (11') und der Vorderkante (6) der Dachöffnung (2) schließt.

7. Windabweiser nach einem der Ansprüche 1 bis 6, **dadurch gekennzeichnet, daß** an Anschläge (16), die am Grundkörper (11) zur Wegbegrenzung bei Erreichen der Betriebsstellung angebracht sind, Weichkunststoffelemente (18) angespritzt sind.

8. Windabweiser nach Anspruch 7, **dadurch gekennzeichnet, daß** die Weichkunststoffelemente (18) an den Anschlägen (16) einteilig mit nach unten über den Grundkörper (11) vorstehenden Weichkunststoffelementen (17) spritzgeformt sind.

9. Windabweiser nach einem der Ansprüche 1 bis 8, **dadurch gekennzeichnet, daß** der Grundkörper (11, 11') aus einem mit Glas- oder Kohlefasern armierten thermoplastischen Kunststoff geformt ist.

10. Windabweiser nach Anspruch 9, **dadurch gekennzeichnet, daß** der thermoplastische Kunststoff Polyamid 6.6, Polyethylenterephthalat oder Polypropylen ist.

11. Windabweiser nach einem der Ansprüche 1 bis 10, **dadurch gekennzeichnet, daß** die Weichkunststoffelemente (17-20, 30, 31, 34) aus einem elastomeren thermoplastischen Kunststoff durch Anspritzen geformt sind.

12. Windabweiser nach Anspruch 11, **dadurch gekennzeichnet, daß** der elastomere thermoplastische Kunststoff ausgewählt ist aus der Gruppe Styrol-Dien-Blockcopolymere, Ethylen-Propylen-Dien-Polymethylen (EPDM), EPDM-Polypropylen-Verschnitte und Polyurethan-Elastomere.
